# EUROPEAN PATENT APPLICATION

(11) **EP 4 664 801 A1**
(43) Date of publication of application: **17.12.2025**
(21) Application number: 25175924.7
(22) Date of filing: 13.05.2025
(51) Int. Cl.: H04K 3/00

(54) **USER EQUIPMENT OPERATING METHOD AND DATA COMMUNICATION SYSTEM OPERATING METHOD FOR RADAR AND DATA COMMUNICATION COEXISTENCE**

(30) Priority: 13.06.2024 KR 20240077164
(71) Applicant: Samsung Electronics Co., Ltd., Suwon-si, Gyeonggi-do 16677 (KR)
(72) Inventor: YUM, Kunil, 16677 Suwon-si (KR); KWON, Yangsoo, 16677 Suwon-si (KR); KIM, Jinho, 16677 Suwon-si (KR); JOO, Hyunseung, 16677 Suwon-si (KR)
(74) Representative: Marks & Clerk LLP

(57) **Abstract**

A method of operating a user equipment, includes: generating time measurement information about a plurality of radar periods in which a radar signal is received on a first frequency band, by measuring the radar signal transmitted from a radar; reporting the time measurement information to a base station; receiving, from the base station, control information based on the time measurement information; identifying, based on the control information, a first data resource included in a data period, which is unused by the radar, between the plurality of radar periods; and performing data communication with the base station based on the first data resource.

## Description

### BACKGROUND

The disclosure relates to a method of operating a user equipment and a method of operating a data communication system, and more particularly, to a user equipment operating method and a data communication system operating method for measuring and/or reporting a radar signal transmitted from a radar to minimize interference between the radar signal and a data signal, such that a radar system coexists with a data communication system.

To increase the utilization of limited communication resources, research on joint communication and sensing (JCAS) has been conducted. To this end, a time period and/or a frequency band used for a radar to sense an object may be used even when a base station performs data communication with a user equipment. In this case, a data communication system is required to perform data communication such that interference by the radar is minimized without interrupting a sensing operation of the radar.

### SUMMARY

Provided are a user equipment operating method and a data communication system operating method for coexistence of radar sensing and data communication by measuring, by a user equipment and/or a base station, a radar signal, which a radar uses for sensing, and identifying a radar resource used for the radar sensing and a data resource usable for the data communication.

The technical problems to be solved by the disclosure are not limited to the technical problems mentioned above, and other technical problems could be clearly understood by those of ordinary skill in the art from the description below.

According to an aspect of the disclosure, a method of operating a user equipment, includes: generating time measurement information about a plurality of radar periods in which a radar signal is received on a first frequency band, by measuring the radar signal transmitted from a radar; reporting the time measurement information to a base station; receiving, from the base station, control information based on the time measurement information; identifying, based on the control information, a first data resource included in a data period, which is unused by the radar, between the plurality of radar periods; and performing data communication with the base station based on the first data resource.

The time measurement information may include at least one of: a time period in which the radar signal is measured by the user equipment, and a time offset.

The method may further include receiving, from the base station, radar information of the radar signal, wherein the radar information is received by the base station from the radar, wherein the generating of the time measurement information comprises generating the time measurement information further based on the radar information, and wherein the radar information comprises at least one of a rotation period of the radar, an angle of the radar signal, a strength of the radar signal, a radar active time, and a pulse length.

The data period may include a guard period adjacent to a radar period based on a time axis, and wherein the identifying of the first data resource may include identifying, as the first data resource, a resource except for (e.g. other than or different from) a resource included in the guard period. The data period may include a guard period adjacent in time to a radar period, and wherein the identifying of the first data resource may include identifying, as the first data resource, a resource except for (e.g. other than or different from) a resource included in the guard period.

The method may further include determining a length of the guard period based on at least one of a length of the radar period, a rotating speed of the radar, and a length of the data period with respect to the length of the radar period.

The radar signal may further include a plurality of sub-signals, any one of (for instance, each of) the plurality of radar periods comprises a plurality of sub-radar periods in which the plurality of sub-signals are received, wherein the time measurement information may further include information about an additional data period unused by the radar between the plurality of sub-radar periods, and wherein the method may further include: identifying a second data resource included in the additional data period based on the control information; and performing data communication with the base station based on the second data resource.

The method may further include receiving, from the base station, radar information of the plurality of sub-signals, wherein the radar information of the plurality of sub-signals may be received by the base station from the radar, wherein the generating of the time measurement information may further include generating the time measurement information further based on the radar information, and wherein the radar information may further include at least one of a shape of a sub-signal included in the radar signal, power of the sub-signal, a length of the sub-signal, a radar period, the data period, and a time offset.

The time measurement information may further include frequency measurement information indicating the first frequency band on which the radar signal is received, wherein the control information may be further based on the frequency measurement information, and wherein the method may further include: identifying a third data resource corresponding to a data band, which does not overlap with the first frequency band, based on the control information; and performing data communication with the base station based on the third data resource. The first frequency band may be an average frequency band of a plurality of radar signals.

The data band may further include a guard band adjacent to a radar band, which the radar uses, based on a frequency axis (e.g. in a frequency domain), and wherein the identifying of the third data resource may further include identifying, as the third data resource, a resource except for (e.g. other than or different from) a resource included in the guard band. The data band may further include a guard band adjacent in frequency to a radar band, which the radar uses, and wherein the identifying of the third data resource may further include identifying, as the third data resource, a resource except for (e.g. other than or different from) a resource included in the guard band.

The method may further include determining a length of the guard band based on at least one of power and frequency swing of the radar signal.

The method may further include: receiving, from the base station, radar information of the radar signal, the radar information being received by the base station from the radar; receiving, through a radar resource included in a radar period, a reception signal distorted from a data signal, which is transmitted from the base station, due to the radar signal; generating an offset corresponding to the radar signal based on the radar information; and generating a post-compensation signal by post-compensating for the reception signal based on the offset, wherein the radar information may further include at least one of a shape of a sub-signal included in the radar signal, power of the sub-signal, a length of the sub-signal, the radar period, a data period, and a time offset.

According to an aspect of the disclosure, a method of operating a user equipment, includes: generating time measurement information about a plurality of pilot periods in which a pilot signal is received on a first frequency band, by measuring the pilot signal transmitted from a radar; reporting the time measurement information to a base station; receiving, from the base station, control information based on the time measurement information; identifying, based on the control information, a first data resource included in a data period, which is unused by the radar, between the plurality of pilot periods; and performing data communication with the base station based on the first data resource, wherein the pilot signal is generated based on a radar signal transmitted from the radar and wherein the pilot signal comprises at least a time resource and a frequency resource to which the radar signal is allocated.

The method may further include receiving, from the base station, pilot information of the pilot signal, the pilot information being received by the base station from the radar, wherein the generating of the time measurement information may further include generating the time measurement information further based on the pilot information, and wherein the pilot information may further include at least one of a shape of a sub-signal included in the pilot signal, power of the sub-signal, a length of the sub-signal, a pilot period, a data period, and a time offset.

The data period may include a guard period adjacent to a pilot period based on a time axis (e.g. in a time domain), and wherein the identifying of the first data resource may include identifying, as the first data resource, a resource except for (e.g. other than or different from) a resource included in the guard period. The data period may include a guard period adjacent in time to a pilot period, and wherein the identifying of the first data resource may include identifying, as the first data resource, a resource except for (e.g. other than or different from) a resource included in the guard period.

A length of the guard period may be determined based on at least one of a length of the pilot period, a rotating speed of the radar, and a length of the data period with respect to the length of the pilot period.

According to an aspect of the disclosure, a method of operating a data communication system comprising a base station and a user equipment for performing data communication with the base station, includes: generating, by the base station, first time measurement information about a plurality of first radar periods in which a radar signal is received on a first frequency band, by measuring the radar signal transmitted from a radar; identifying, by the base station, based on the first time measurement information, a first data resource included in a first data period, which is unused by the radar, between the plurality of first radar periods; and transmitting, by the base station, a downlink signal to the user equipment based on the first data resource.

The radar may be positioned in a first direction with respect to the base station, and wherein the base station may be configured to transmit the downlink signal in the first direction.

The first data period may include a guard period adjacent to a first radar period based on a time axis (e.g. in a time domain), wherein the identifying of the first data resource may include identifying, as the first data resource, a resource except for (e.g. other than or different from) a resource included in the guard period, and wherein a length of the guard period may be determined based on at least one of a length of the radar period, a rotating speed of the radar, and a length of the data period with respect to the length of the radar period. The first data period may include a guard period adjacent in time to a first radar period, wherein the identifying of the first data resource may include identifying, as the first data resource, a resource except for (e.g. other than or different from) a resource included in the guard period, and wherein a length of the guard period may be determined based on at least one of a length of the radar period, a rotating speed of the radar, and a length of the data period with respect to the length of the radar period.

The method may further include: generating, by the user equipment, second time measurement information about a plurality of second radar periods in which the radar signal is received, by measuring the radar signal transmitted from the radar; reporting, by the user equipment, the second time measurement information to the base station; receiving, by the base station, radar information of the radar signal from the radar; identifying, by the base station, the plurality of second radar periods in which the radar signal is received by the user equipment, based on the second time measurement information and the radar information; generating, by the base station, a pre-compensation signal by pre-compensating for interference by the radar signal to the downlink signal based on the second time measurement information and the radar information; and transmitting, by the base station, the pre-compensation signal to the user equipment through a radar resource included in any one of the plurality of second radar periods.

The radar information may include at least one of a shape of a sub-signal included in the radar signal, power of the sub-signal, a length of the sub-signal, a radar period, a data period, and a time offset.

At least some of the above and other features of the invention are set out in the claims.

### BRIEF DESCRIPTION OF THE DRAWINGS

The above and/or other aspects of the disclosure will be more clearly understood from the following detailed description taken in conjunction with the accompanying drawings, in which:
FIG. 1 illustrates a radar and a data communication system according to an embodiment;
FIG. 2 is a signal exchange diagram between a radar and a data communication system according to an embodiment;
FIG. 3 is a signal exchange diagram between a radar and a data communication system according to an embodiment;
FIGS. 4A to 4C illustrate a radar signal and a data period according to the radar signal according to an embodiment;
FIGS. 5A to 5C illustrate a radar signal and a data band according to the radar signal according to an embodiment;
FIG. 6 illustrates a data resource and a radar resource according to an embodiment;
FIG. 7 illustrates interference by a radar signal to a data signal according to an embodiment;
FIG. 8A is a signal exchange diagram illustrating a pre-compensation operation of a data communication system according to an embodiment, and FIG. 8B illustrates a reception signal according to the pre-compensation operation described with reference to FIG. 8A;
FIG. 9A is a signal exchange diagram illustrating a post-compensation operation of a data communication system according to an embodiment;
FIG. 9B illustrates a reception signal according to the post-compensation operation described with reference to FIG. 9A;
FIG. 10 is a signal exchange diagram between a radar and a data communication system according to an embodiment; and
FIG. 11 illustrates a pilot signal according to an embodiment.

### DETAILED DESCRIPTION

The terms as used in the disclosure are provided to merely describe specific embodiments, not intended to limit the scope of other embodiments. Singular forms include plural referents unless the context clearly dictates otherwise. The terms and words as used herein, including technical or scientific terms, may have the same meanings as generally understood by those skilled in the art. The terms as generally defined in dictionaries may be interpreted as having the same or similar meanings as or to contextual meanings of the relevant art. Unless otherwise defined, the terms should not be interpreted as ideally or excessively formal meanings. Even though a term is defined in the disclosure, the term should not be interpreted as excluding embodiments of the disclosure under circumstances.

The term "couple" and the derivatives thereof refer to any direct or indirect communication between two or more elements, whether or not those elements are in physical contact with each other. The terms "transmit", "receive", and "communicate" as well as the derivatives thereof encompass both direct and indirect communication. The terms "include" and "comprise", and the derivatives thereof refer to inclusion without limitation. The term "or" is an inclusive term meaning "and/or". The phrase "associated with," as well as derivatives thereof, refer to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" refers to any device, system, or part thereof that controls at least one operation. The functionality associated with any particular controller may be centralized or distributed, whether locally or remotely. The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C, and any variations thereof. As an additional example, the expression "at least one of a, b, or c" may indicate only a, only b, only c, both a and b, both a and c, both b and c, all of a, b, and c, or variations thereof. Similarly, the term "set" means one or more. Accordingly, the set of items may be a single item or a collection of two or more items.

Moreover, multiple functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code.

Hereinafter, the embodiments are described based on a wireless communication system based on a new radio (NR) network, but the technical idea of the disclosure is not limited to the NR network and may also be applied to other wireless communication systems (e.g., cellular communication systems, such as long term evolution (LTE), LTE-advanced (LTE-A), wireless broadband (WiBro), and global system for mobile communication (GSM), and short-range communication systems, such as Bluetooth and near field communication (NFC)) having similar technical backgrounds or channel configurations.

A wireless communication network of a wireless communication system may support communication of a plurality of wireless communication devices by sharing available network resources. For example, in a wireless communication network, various multiple access schemes, such as code division multiple access (CDMA), frequency division multiple access (FDMA), time division multiple access (TDMA), orthogonal frequency division multiple access (OFDMA), single carrier frequency division multiple access (SC-FDMA), OFDM-FDMA, OFDM-TDMA, and OFDM-CDMA, may be used to transfer information. Hereinafter, the wireless communication system described above may be referred to as a data communication system.

In addition, various functions described below may be implemented or supported by artificial intelligence technology or one or more computer programs, and each of the one or more computer programs includes computer-readable program code and is stored in a computer-readable medium. The term "computer-readable medium" includes every type of medium accessible by a computer, such as read only memory (ROM), random access memory (RAM), a hard disk drive, a compact disc (CD), a digital video disc (DVD), or any other type of memory. A "non-transitory" computer-readable medium excludes transitory wired, wireless, optical, or other communication links through which electrical or other signals are transmitted. The non-transitory computer-readable medium includes a medium in which data is permanently stored and a medium in which data is stored and overwritten by other data later, such as a rewritable optical disc or an erasable memory device.

The embodiments described below employ a hardware-based access method as an example. However, because the embodiments include technology using both hardware and software, the embodiments do not exclude a software-based access method.

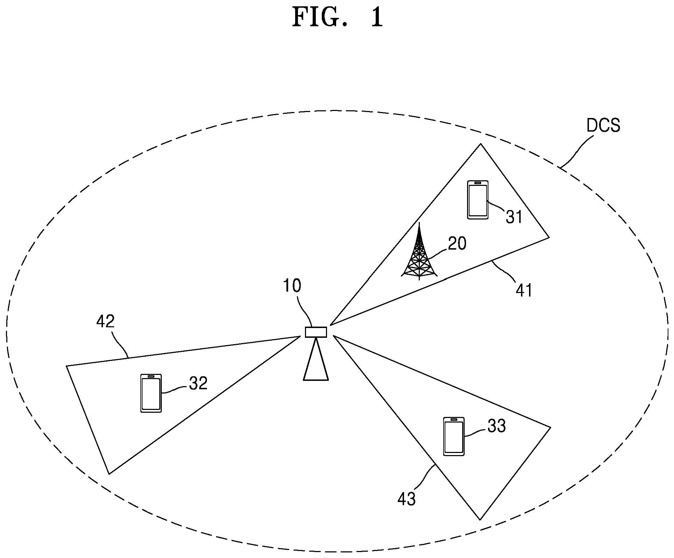

FIG. 1 illustrates a radar and a data communication system DCS according to an embodiment.

Referring to FIG. 1, the data communication system DCS may include a base station 20 and a plurality of user equipments, e.g., first user equipment 31, second user equipment 32, and third user equipment 33. The data communication system DCS may be the wireless communication system described above. FIG. 1 shows that the data communication system DCS includes three user equipments (the first user equipment 31, the second user equipment 32, and the third user equipment 33). The disclosure is not limited to the three user equipments included in the data communication system DCS shown in FIG. 1, and at least one user equipment may be included in the data communication system DCS.

The base station 20 may be generally referred to as a fixed station configured to communicate with the first user equipment 31, the second user equipment 32, and the third user equipment 33 and/or other base stations and exchange data and control information by communicating with the first user equipment 31, the second user equipment 32, and the third user equipment 33 and/or the other base stations. Hereinafter, this exchange is commonly referred to as "data communication." The base station 20 may be referred to as a cell, a Node B, an evolved-Node B (eNB), a next generation Node B (gNB), a sector, a site, a base transceiver system (BTS), an access point (AP), a relay node, a remote radio head (RRH), a radio unit (RU), a small cell, a device, or the like.

The first user equipment 31, the second user equipment 32, and the third user equipment 33 may be referred to as arbitrary devices which may be fixed or be mobile and communicate with the base station 20 to transmit and receive data and/or control information (i.e., perform data communication). Each of the first user equipment 31, the second user equipment 32, and the third user equipment 33 may be referred to as a terminal, a terminal equipment, a mobile station (MS), a mobile terminal (MT), a user terminal (UT), a subscribe station (SS), a wireless communication device, a wireless device, a handheld device, or the like.

A radar 10 may sense an object (or referred to as a target) within a certain range (sense the distance to the object, the speed of the object, and/or the like) based on a first radar signal 41, a second radar signal 42, and a third radar signal 43 (referred to as radar beams). In more detail, the radar 10 may transmit the first radar signal 41, the second radar signal 42, and the third radar signal 43 while rotating at a constant angular velocity. The radar 10 may rotate clockwise.

For example, referring to FIG. 1, the radar 10 may transmit the first radar signal 41 at a first time point and perform radar sensing by measuring a signal returned when the first radar signal 41 is reflected from a first object. The radar 10 may transmit the second radar signal 42 at a second time point after the first time point and perform radar sensing by measuring a signal returned when the second radar signal 42 is reflected from a second object. Similarly, the radar 10 may transmit the third radar signal 43 at a third time point after the second time point and perform radar sensing by measuring a signal returned when the third radar signal 43 is reflected from a third object. The radar 10 according to the disclosure may sense an object based on radar signals having a constant width. That is, as shown in FIG. 1, the widths of the first radar signal 41, the second radar signal 42, and the third radar signal 43 may be the same. However, the radar 10 according to the disclosure does not omni-directionally transmit radar signals having the same width. The width of a radar signal may be determined according to a radar rotating speed, an angle and a strength at which the radar signal is transmitted from the radar 10. For instance, the width of a radar signal (e.g. the beamwidth) may be the angle between the points where the power of the beam is at a particular level (e.g. half of its maximum value).

In an embodiment, the radar 10 transmits the first radar signal 41, the second radar signal 42, and the third radar signal 43 while rotating counterclockwise. However, an operation of the radar 10 according to the disclosure is not limited to the transmission of the first radar signal 41, the second radar signal 42, and the third radar signal 43 while rotating counterclockwise. For example, the radar 10 according to an embodiment may sequentially transmit the third radar signal 43, the second radar signal 42, and the first radar signal 41 for object sensing while rotating clockwise. Alternatively, the radar 10 according to an embodiment may not sequentially transmit radar signals and may transmit a radar signal in every certain period toward a particular position to sense an object at the particular position.

The radar 10 according to the disclosure may transmit the first radar signal 41, the second radar signal 42, and the third radar signal 43 in a certain period in particular directions as described above. Therefore, each of the base station 20 and the first user equipment 31, the second user equipment 32, and the third user equipment 33 at particular positions may receive a radar signal in the certain period. In other words, the radio signal received by each of the base station 20 and the first user equipment 31, the second user equipment 32, and the third user equipment 33 may have periodicity.

The first radar signal 41, the second radar signal 42, and the third radar signal 43 transmitted from the radar 10 may influence data communication of the first user equipment 31, the second user equipment 32, and the third user equipment 33, respectively, within the coverages of the first radar signal 41, the second radar signal 42, and the third radar signal 43. For example, when the radar 10 transmits the first radar signal 41 at the first time point, the first radar signal 41 may act as interference to data communication between the first user equipment 31 and the base station 20, thereby causing a decrease in data communication quality. Similarly, the second radar signal 42 and the third radar signal 43 may respectively act as interference to data communication between the second and third user equipments 32 and 33 and the base station 20, thereby causing a decrease in data communication quality.

For example, referring to FIG. 1, the first radar signal 41 and a reflected signal of the first radar signal 41 may cause a decrease in data communication quality between the first user equipment 31 and the base station 20. That is, when frequency bands and/or time periods respectively used by a data signal for data communication between the first user equipment 31 and the base station 20 and the first radar signal 41 overlap each other, interference by the first radar signal 41 may cause a decrease in data communication quality.

Therefore, the data communication system DCS according to the disclosure may determine (or identify) a data resource for data communication by measuring frequency bands and time periods, to which the first radar signal 41, the second radar signal 42, and the third radar signal 43 are allocated, to efficiently use a limited resource, and perform the data communication based on the data resource. Therefore, interference between radar sensing and data communication may be minimized such that a radar system coexists with the data communication system DCS, thereby efficiently using a limited communication resource.

FIG. 1 shows that the data communication system DCS includes the radar 10, which is an example to describe a physical position relationship. In other embodiments, the radar 10 may not be included in the data communication system DCS. The radar 10 may be referred to as a radar system.

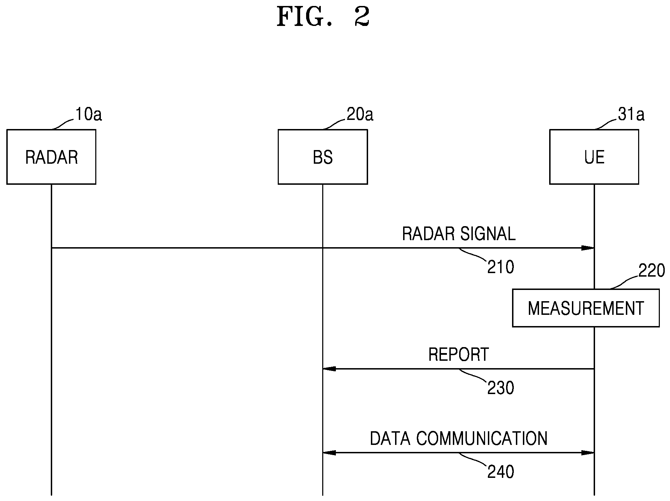

FIG. 2 is a signal exchange diagram between a radar and a data communication system according to an embodiment.

FIG. 2 is a signal exchange diagram among a radar 10a, a base station 20a, and a user equipment 31a. The radar 10a, the base station 20a, and the user equipment 31a of FIG. 2 may respectively correspond to the radar 10, the base station 20, and the first user equipment 31 described above with reference to FIG. 1. Accordingly, the description made with reference to FIG. 1 is omitted herein.

In operation 210, the user equipment 31a may receive a radar signal transmitted from the radar 10a. As described above with reference to FIG. 1, the user equipment 31a according to the disclosure may receive the radar signal, which the radar 10a transmits toward the user equipment 31a. The radar 10a may periodically transmit the radar signal in a direction in which the user equipment 31a is positioned, while rotating within a certain range. Therefore, the user equipment 31a may periodically receive the radar signal transmitted from the radar 10a. In other words, the radar signal, which the user equipment 31a receives, has periodicity.

In operation 220, the user equipment 31a may measure the radar signal transmitted from the radar 10a. The user equipment 31a may generate information about the period of the radar signal by measuring the radar signal based on the strength of a received signal. For example, the user equipment 31a may determine that the received signal is the radar signal when the strength of the received signal is greater than or equal to a preset threshold, and generate, based on the determination, information about a time period in which the radar signal is received and/or a frequency band, which the radar signal uses (or to which the radar signal is allocated). The information about the period of the radar signal, which is measured by the user equipment 31a according to the disclosure, is referred to as time measurement information.

The time measurement information according to the disclosure may include the length of a period in which the user equipment 31a receives the radar signal (or a period in which the user equipment 31a does not receive the radar signal) and/or a time point where measurement of the radar signal starts (or the difference between the time point where measurement of the radar signal starts and a time point where the radar signal is received). Hereinafter, the length of the period in which the radar signal is received may be referred to as a time period, and the time point where measurement of the radar signal starts may be referred to as a time offset. The time offset may be an offset in time relative to a predefined point in time. The predefined point in time may repeat based on a time between radar signals. The time period may be an average time period measured over a plurality of radar signals. In addition or alternatively, the time offset may be an average time offset measured over a plurality of radar signals. For example, the time offset can be referred to as the time interval from a reference signal of a specific time shared by the base station 20a and the user equipment 31a to the time period mentioned above.

In operation 230, the user equipment 31a may report the time measurement information to the base station 20a. Therefore, the user equipment 31a and the base station 20a may share the time measurement information. The base station 20a and the user equipment 31a may perform data communication to be described below, based on the time measurement information. The base station 20a may generate control information based on the reported time measurement information. The base station 20a may transmit the control information to the user equipment 31a. Herein, the control information may include information for using, for data communication, a resource included in a data period according to the time measurement information. The user equipment 31a may receive the control information and identify, based on the control information, a data resource included in a data period unused by the radar 10a between a plurality of radar periods.

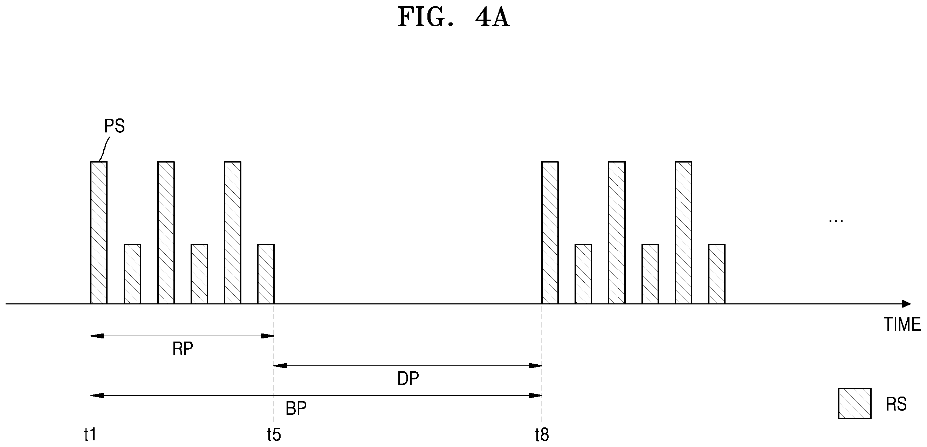

The user equipment 31a and the base station 20a may identify a data resource usable for data communication based on the control information. The data resource is a communication resource except for (e.g. other than, or different from) a radar resource to which the radar signal is allocated. In the disclosure, a period in which the user equipment 31a receives the radar signal may be referred to as a radar period and a period in which the user equipment 31a does not receive the radar signal for a certain time (i.e., a period in which the radar 10a does not transmit the radar signal toward the user equipment 31a) may be referred to as a data period. Therefore, the data resource described above is a resource included in the data period (e.g. a resource that is not included in the radar period). In addition, because the user equipment 31a and the base station 20a receive the radar signal in a certain period, the data period may be a time period between radar periods. That is, a radar period and a data period may alternate in terms of time domain. A detailed description of the radar period and the data period may be made below with reference to FIG. 4A.

In operation 240, the user equipment 31a and the base station 20a may perform data communication based on the data resource included in the data period.

In an embodiment, the base station 20a may measure the radar signal transmitted from the radar 10a. Due to the difference between respective relative positions of the base station 20a and the user equipment 31a with respect to the radar 10a, time measurement information, which the base station 20a generates by measuring the radar signal, may be different from time measurement information, which the user equipment 32 or 33 (see FIG. 1) generates by measuring the radar signal. For example, the base station 20a and the user equipment 31a may receive the radar signal at different time points. In addition, time measurement information may vary due to speed differences of rotation periods of the radar 10 (see FIG. 1). The base station 20a and the user equipment 31a according to the disclosure may perform data communication further based on the time measurement information, which the base station 20a has measured.

When transmitting a data signal (i.e., a downlink signal) for data communication in a direction in which the radar 10a is positioned, the base station 20a may use, for data signal transmission, a data resource identified based on time measurement information, which the base station 20a generates by measuring the radar signal. By doing this, interference by the radar 10a to data communication may be minimized.

In an embodiment, the user equipment 31a and/or the base station 20a may additionally perform an operation of determining the periodicity of the radar signal. In addition, a determination result of the periodicity of the radar signal may be shared by the user equipment 31a and the base station 20a. The user equipment 31a and/or the base station 20a may determine the periodicity of the radar signal and, if it is determined that there is no periodicity of the radar signal, may not perform the operation described above. For example, when the direction of the radar signal is determined without rotation of a radar like a multi-input multi-output(MIMO) radar, there may be no periodicity of the radar signal received by the user equipment 31a and/or the base station 20a. Therefore, when the radar 10a aperiodically uses a time resource, the user equipment 31a and/or the base station 20a may perform data communication only through a time resource and a frequency resource, which the radar 10a does not use.

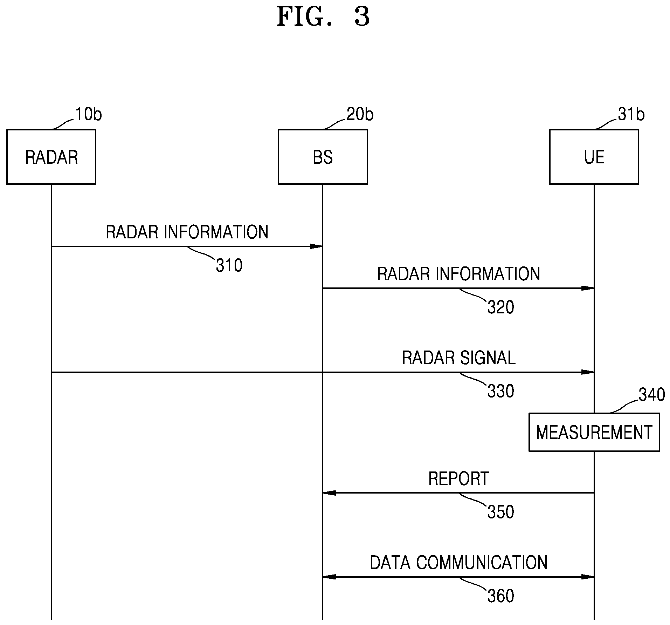

FIG. 3 is a signal exchange diagram between a radar and a data communication system according to an embodiment.

FIG. 3 is a signal exchange diagram among a radar 10b, a base station 20b, and a user equipment 31b. The radar 10b, the base station 20b, and the user equipment 31b of FIG. 3 may respectively correspond to the radar 10, the base station 20, and the first user equipment 31 described above with reference to FIG. 1. Accordingly, the description made with reference to FIG. 1 is omitted herein.

In operation 310, the base station 20b may receive radar information from the radar 10b.

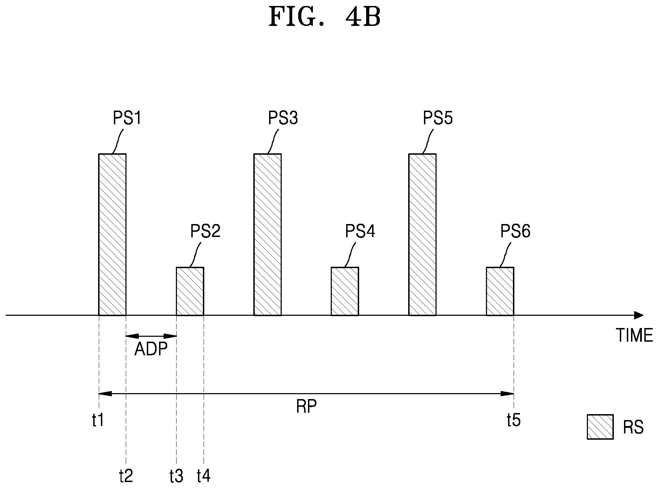

In operation 320, the user equipment 31b may receive the radar information (i.e., the radar information, which the base station 20b has received from the radar 10b) from the base station 20b. The radar information according to the disclosure may indicate information about a radar signal, which the radar 10b knows (or which is previously determined). For example, the radar information may include at least one of the rotation period of a radar, the angle of a radar signal, the strength of the radar signal, a radar active time, and the length of a pulse (hereinafter, may be referred to be a 'sub-signal') included in the radar signal. The parameters described above and included in the radar information are described below in more detail with reference to FIGS. 4A and 4B.

In operation 330, the user equipment 31b may receive a radar signal transmitted from the radar 10b.

In operation 340, the user equipment 31b may measure the radar signal transmitted from the radar 10b. As described above, the user equipment 31b may generate time measurement information that is information about the period of the radar signal. The user equipment 31b according to the disclosure may generate the time measurement information by measuring the radar signal based on the radar information received from the base station 20b in operation 320. For example, the user equipment 31b and/or the base station 20b may measure the radar signal received on a frequency band from the radar 10b, to generate time measurement information about a plurality of radar periods in which the radar signal is received on the frequency band.

The user equipment 31b may more easily measure the radar signal based on the radar information. For example, the user equipment 31b may search for the radar signal based on the pulse length or the radar active time included in the radar information. When the radar signal search is successful in a corresponding period, the user equipment 31b may search for the radar signal based on a period of the radar active time or the pulse length. In addition, the success rate and the accuracy of the radar signal search may be improved based on a combination of received radar signals. Thereafter, when the user equipment 31b fails in the radar signal search at a particular time point or during a certain period, the user equipment 31b may determine that the user equipment 31b is out of a range in which the radar signal influences data communication, measure a data period, which includes the particular time point, and a time offset, and report the measurement result to the base station 20b in operation 350.

Although the user equipment 31b may obtain information about the radar signal by receiving the radar information in operation 320, because the angle of the radar signal defined by the radar 10b may differ from the angle of the radar signal defined by the user equipment 31b, the user equipment 31b may measure the radar signal in operation 330. For example, the angle of the radar signal defined by the radar 10b may indicate an angle up to a certain strength with respect to the maximum strength of the radar signal transmitted by the radar 10b, and the angle of the radar signal defined by the user equipment 31b may indicate an angle and/or a time at which an operation of the radar 10b may influence data communication (e.g. over which the received strength of the radar signal is above a threshold). Therefore, the user equipment 31b may measure the radar signal based on the radar information to generate accurate time measurement information.

In addition, even when the user equipment 31b knows the angle of the radar signal and/or the rotation period of the radar 10b through the radar information, it may be needed to know a time offset by which the radar signal actually influences the user equipment 31b. Therefore, even though the user equipment 31b knows the radar information, the user equipment 31b may measure the radar signal in operation 340 for coexistence of a radar system and the data communication system (i.e., to minimize interference to each other).

Referring to FIG. 3 with the description made above, in operation 360, the user equipment 31b and the base station 20b may perform data communication by using a data resource identified based on the time measurement information. In operation 310, the base station 20b may receive the radar information from the radar 10b, and in operation 320, the base station 20b may transmit the radar information to the user equipment 31b. In operation 340, the user equipment 31b may generate the time measurement information by measuring the radar signal based on the radar information. In operation 350, the user equipment 31b may report the time measurement information to the base station 20b. In operation 360, the user equipment 31b and the base station 20b may perform data communication through the data resource identified based on the time measurement information.

FIGS. 4A to 4C illustrate a radar signal and a data period according to the radar signal according to an embodiment.

FIGS. 4A to 4C illustrate a radar signal RS, which a user equipment receives from a radar. As described above, the user equipment may periodically receive the radar signal RS from the radar. In addition, the user equipment according to the disclosure may measure the radar signal RS to determine a radar period RP in which the radar signal RS is received, and to determine a data period DP in which the radar signal RS is not received by the user equipment (or does not exist) for a certain time.

Referring to FIG. 4A, because the radar signal RS received by the user equipment may have periodicity, the user equipment may determine a plurality of radar periods RP and determine at least one data period DP between the plurality of radar periods RP. Each data period DP may be between successive radar periods RP (e.g. between a pair of consecutive radar periods RP). In addition, the user equipment may perform data communication with a base station through a data resource included in the data period DP.

Referring to FIG. 4A, the radar signal RS may include a plurality of pulse signals PS. Each of the plurality of pulse signals PS may be one of a radar pulse, an echo signal, and a control pulse. Herein, the radar pulse may be a signal, which a radar transmits for object sensing, the echo signal may be a signal returned when the radar pulse is reflected from an object, and the control pulse may be a signal, which the radar transmits for adjustment between a transmitter and a receiver of the radar according to the radar pulse and the echo signal. Each of the plurality of pulse signals PS shown in FIG. 4A may be referred to as a sub-signal included in the radar signal RS.

Referring to FIG. 4A with the description made above, a user equipment according to the disclosure may generate time measurement information by measuring the radar signal RS. The user equipment may determine, based on the time measurement information, the data period DP in which the radar signal RS does not exist for a certain time (from a fifth time point t5 to an eighth time point t8). In other words, the user equipment may determine the data period DP in which the plurality of pulse signals PS do not exist for the certain time. In addition, the user equipment may determine a radar period RP (from a first time point t1 to the fifth time point t5), in which the plurality of pulse signals PS exist, other than the data period DP. A burst period BP (from the first time point t1 to the eighth time point t8) may include the data period DP and the radar period RP. The burst period BP may be a period between the start of a radar period RP and a start of a next radar period RP.

As described above, because the radar according to the disclosure may periodically transmit the radar signal RS to the user equipment at a particular position, the user equipment may periodically receive the radar signal RS. Therefore, the burst period BP including the radar period RP and the data period DP may be repeated. The user equipment according to the disclosure may measure the periodicity of the radar signal RS and perform, based on the measured periodicity, data communication by using a time period in which the radar signal RS does not exist in a frequency band used by the radar. The time measurement information may be generated based on one or more average values taken over a plurality of repeating radar signals. For instance, the data period may be an average data period. In addition or alternatively, the radar period may be an average radar period.

FIG. 4B illustrates in more detail the radar period RP described above with reference to FIG. 4A.

The parameters included in the radar information described above are described below with reference to FIG. 4B. The length, i.e., the pulse length, of a first pulse signal PS1 included in the radar period RP is from the first time point t1 to a second time point t2, and the pulse length of a second pulse signal PS2 is from a third time point t3 to a fourth time point t4. Likewise, the pulse lengths of third to sixth pulse signals PS3 to PS6 may be similarly understood. In addition, the strength of the first pulse signal PS1 may be greater than the strength of the second pulse signal PS2 and the same as the strength of the third pulse signal PS3. The angle of the radar signal RS may indicate an angle up to a certain strength with respect to the maximum strength of the radar signal RS transmitted by the radar as described above with reference to FIG. 3, and the active time of the radar may indicate a time for (e.g. over) which the radar transmits a pulse signal.

Referring to FIG. 4B, the radar period RP may include the first to sixth pulse signals PS1 to PS6. In addition, the radar period RP may include an additional data period ADP (e.g., from the second time point t2 to the third time point t3) corresponding to between adjacent pulse signals (e.g., between the first and second pulse signals PS1 and PS2). As described above, the radar period RP shown in FIG. 4B may include five additional data periods ADP. The five additional data periods ADP may be between a plurality of sub-radar periods. That is, a sub-radar period may be referred to as a period in which a sub-signal is received. At least one of a plurality of radar periods according to the disclosure may include a plurality of sub-signals. That is, at least one of the plurality of radar periods may include a plurality of sub-radar periods.

The user equipment (e.g., 31a or 31b) according to the disclosure may perform data communication with a base station based on the additional data period ADP included in the radar period RP. More particularly, the user equipment may measure a radar signal and/or determine the data period DP (see FIG. 4A) and the radar period RP based on radar information received from the base station and furthermore determine the additional data period ADP included in the radar period RP. The additional data period ADP may be between sub-signals included in the radar signal RS. The user equipment may perform data communication with the base station through data resources included in the data period DP (see FIG. 4A) and the additional data period ADP. The user equipment and/or the base station according to the disclosure may identify a period and a resource, which the radar does not use, as described above and perform data communication based on the identified period and resource, thereby performing the data communication by efficiently using a limited resource while minimizing interference due to the radar.

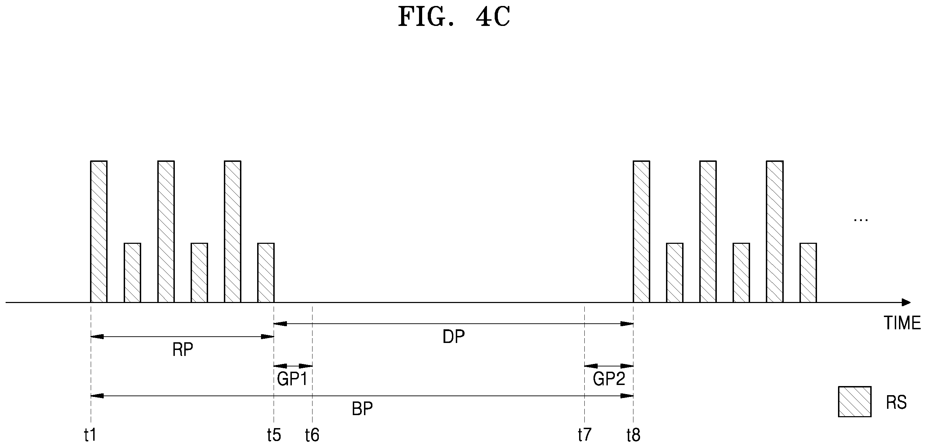

FIG. 4C may be understood with reference to FIG. 4A, and the description made with reference to FIG. 4A is omitted herein. Referring to FIG. 4C, the data period DP may include a first guard period GP1 and a second guard period GP2 that may be respectively adjacent to radar periods RP. The user equipment according to the disclosure may not identify resources included in the first guard period GP1 and the second guard period GP2 as a data resource. That is, the user equipment may not transmit a data signal through the resources included in the first guard period GP1 and the second guard period GP2. The user equipment may not identify the resources included in the first guard period GP1 and the second guard period GP2 as a data resource to minimize interference to data communication due to the radar signal RS.

The length of the first guard period GP1 shown in FIG. 4C is from the fifth time point t5 (an end of a preceding radar period RP) to a sixth time point t6 and the length of the second guard period GP2 is from a seventh time point t7 to the eighth time point t8 (a start of a succeeding radar period RP). The lengths of the first guard period GP1 and the second guard period GP2 according to the disclosure may be determined based on at least one of the length (from the first time point t1 to the fifth time point t5) of the radar period RP, the rotating speed (e.g. the rotation speed) of the radar, and the length (from the fifth time point t5 to the eighth time point t8) of the data period DP. For example, when the rotating speed of the radar is fast, the length of the data period DP may be less than the length of the radar period RP and the user equipment and/or the base station may determine the length of a guard period to be relatively large. For instance, as the rotating speed increases, the length of the guard period may increase.

FIGS. 4A to 4C show that the radar period RP includes six pulse signals PS, which is an example. The number of pulse signals PS included in the radar signal RS according to the disclosure is not limited to those six pulse signals PS. The number of additional periods ADP in a radar period RP may be n-1, wherein n is the number of pulses in the radar period RP, and where n is an integer that is greater than or equal to two). The radar period RB may be a time range from the start of the first pulse signal in the radar signal to the end of the last pulse signal in the radar signal.

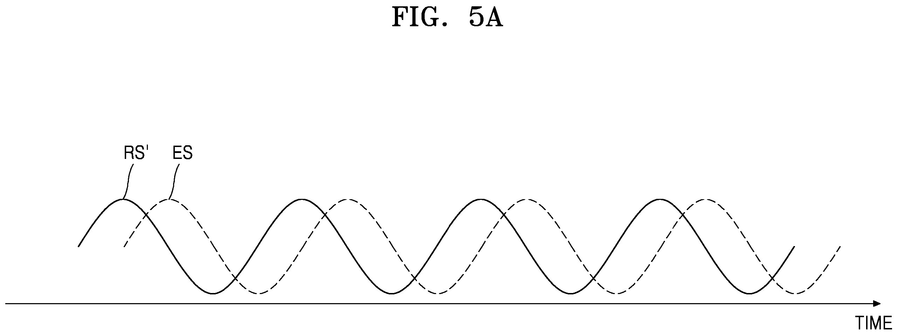

As described above, the radar may generally transmit a pulse signal and measure an echo (i.e., an echo signal) of the pulse signal to measure the distance to and the distribution of an object based on the difference between two time points. However, the radar according to the disclosure is not limited to the radar that may generally transmit the pulse signal (e.g. a wideband pulse signal) and measure the echo of the pulse signal. In an embodiment, the radar may perform object sensing by using a narrowband signal. When the radar senses an object based on a narrowband signal, the user equipment according to the disclosure may use, for data communication, a frequency resource, which the radar may not use. This embodiment is described below with reference to FIGS. 5A to 5C.

FIGS. 5A to 5C illustrate a radar signal and a data band according to the radar signal according to an embodiment.

FIGS. 5A to 5C illustrate a radar signal RS' received by a user equipment from a radar and an echo signal ES. As described above, the echo signal ES may be a signal returned when the radar signal RS' is reflected from an object. A radar may measure the echo signal ES to measure the distance to and the distribution and speed of the object based on the difference between two time points. Although it has been described above with reference to FIGS. 4A to 4C that the radar transmits a radar signal (e.g., the radar signal RS of FIG. 4A) including at least one pulse signal, as shown in FIG. 5A, the radar may transmit the radar signal RS' including a narrowband signal.

As described above with reference to FIGS. 4A to 4C, the radar may transmit a pulse signal (e.g., the pulse signal PS of FIG. 4A) having a square waveform or a similar one in terms of time domain. The pulse signal (e.g., the pulse signal PS of FIG. 4A) having a square waveform or a similar one may be a wideband signal (or a sync signal) using almost all bands in terms of frequency domain. Therefore, when the radar uses the pulse signal (e.g., the pulse signal PS of FIG. 4A) having a square waveform or a similar one, because there exists little frequency resource, which the radar does not use, it is difficult to ensure a frequency resource usable for data communication in terms of frequency domain from a time resource, which the radar uses.

Because the radar signal RS' shown in FIG. 5A uses only a narrow frequency band, there may exist a frequency resource unused even in the time domain which the radar uses. Therefore, the user equipment according to the disclosure may perform data communication by using a frequency resource unused by the radar, in a time period used by the radar. To use the frequency resource described above, the user equipment may measure the radar signal RS' and report the measurement result to a base station.

Similar to operations 310 and 320 described above with reference to FIG. 3, the radar may transmit radar information to the base station to use a frequency resource, which the radar does not use, for data communication. The base station may transmit the radar information received from the radar to the user equipment. Herein, the radar information may further include information about a frequency band, which the radar signal RS' uses, and a frequency band used to detect the echo signal ES. In an embodiment, the radar information may include information (e.g., the rotation period of the radar described above with reference to FIG. 3 and the like) about a time domain, which the radar signal RS' uses, and information (the frequency band, which the radar signal RS' uses, the frequency band used to detect the echo signal ES, and the like) about a frequency domain, which the radar signal RS' uses. When a frequency band, which the radar uses, varies with time, the radar information according to an embodiment may further include information about a change in the frequency band (e.g. a change in the frequency band over time).

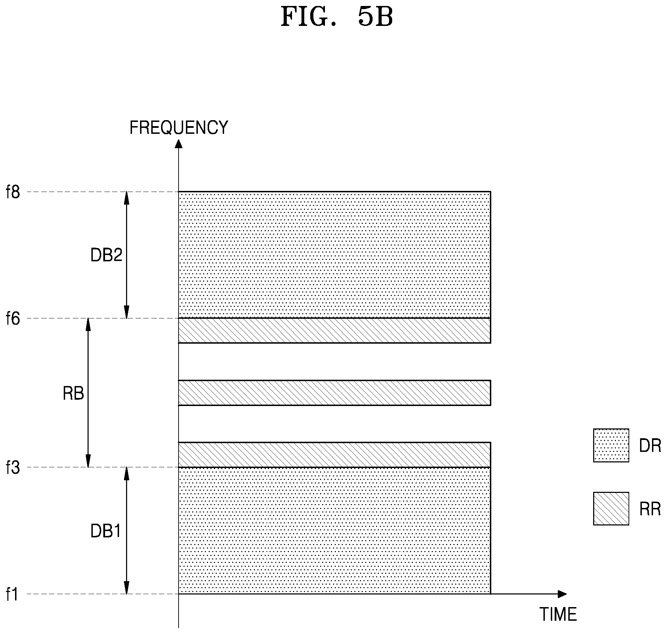

The base station according to an embodiment may identify a frequency band, which the radar signal RS' does not use, based on received radar information and perform data communication based on the identified frequency band. In addition, the user equipment according to an embodiment may receive the radar information from the base station and generate frequency measurement information by measuring the radar signal RS' based on the received radar information. The user equipment may report the frequency measurement information to the base station and determine a data band (see a first data band DB1 and a second data band DB2 of FIG. 5B) that is a frequency band, which the radar does not use, and a radar band (see a radar band RB of FIG. 5B) that is a frequency band, which the radar uses. The user equipment may report both the time measurement information and the frequency measurement information to the base station. In the disclosure, it may be described that the frequency measurement information is included in the time measurement information. The base station may generate control information based on the frequency measurement information and transmit the control information to the user equipment. The user equipment may identify a data resource based on the control information. The user equipment may perform data communication through the data resource included in the data band (see the first data band DB1 and the second data band DB2 of FIG. 5B). The data band (see the first data band DB1 and the second data band DB2 of FIG. 5B) and the radar band (see the radar band RB of FIG. 5B) are described below in more detail with reference to FIG. 5B.

FIG. 5B illustrates a frequency band used to transmit the radar signal RS' (see FIG. 5A) described with reference to FIG. 5A. Referring to FIG. 5B, the radar may transmit a radar signal through a radar resource RR included in a radar band RB (from a third frequency f3 to a sixth frequency f6). As described above, the user equipment may generate frequency measurement information by receiving radar information and/or measuring the radar signal and determine the radar band RB and first and second data bands DB1 and DB2 based on the frequency measurement information. The user equipment may determine certain bands, which the radar does not use, as the first data band DB1 and the second data band DB2 and determine the radar band RB including a frequency band, which the radar uses. Referring to FIG. 5B, the user equipment may measure the radar signal to determine the first data band DB1 (from a first frequency f1 to the third frequency f3) and the second data band DB2 (from the sixth frequency f6 to an eighth frequency f8), which do not overlap with the radar band RB. The user equipment may perform data communication with the base station through a data resource DR included in the first data band DB1 and the second data band DB2.

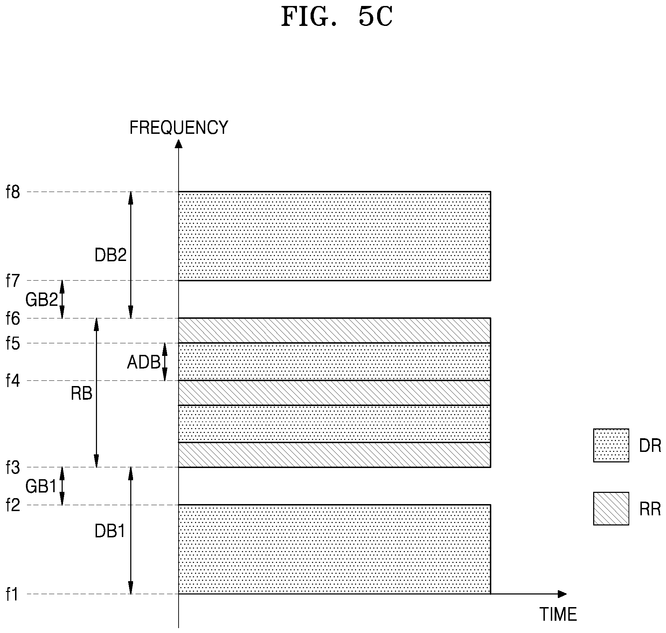

FIG. 5C may be understood with reference to FIG. 5B, and the description made with reference to FIG. 5B is omitted herein. Referring to FIG. 5C, the first data band DB1 may include a first guard band GB1 and the second data band DB2 may include a second guard band GB2. The first guard band GB1 and the second guard band GB2 may be adjacent to the radar band RB (e.g. in the frequency domain). The user equipment according to the disclosure may not identify resources included in the first guard band GB1 and the second guard band GB2 as a data resource. That is, the user equipment may not transmit a data signal through the resources included in the first guard band GB1 and the second guard band GB2. The user equipment may not identify the resources included in the first guard band GB1 and the second guard band GB2 as a data resource to prevent interference to data communication due to the radar signal RS' (see FIG. 5A).

The length of the first guard band GB1 shown in FIG. 5C is from a second frequency f2 to the third frequency f3 (an end of the first data band DB1), and the length of the second guard band GB2 is from the sixth frequency f6 (a start of the second data band DB2) to a seventh frequency band f7. The lengths of the first guard band GB1 and the second guard band GB2 according to the disclosure may be determined based on at least one of the strength and the frequency swing of the radar signal. Herein, the frequency swing may indicate a frequency band (e.g., a frequency band on which it is predicted that an echo signal is received) used for the radar to detect the echo signal. For example, when the frequency swing is large, the user equipment and/or the base station may determine the lengths of the first guard band GB1 and the second guard band GB2 to be relatively large. For instance, the lengths of the guard bands may increase with increasing frequency swing. The strength and the frequency swing of the radar signal described above may be included in the radar information described above.

The radar band RB, the first data band DB1 and the second data band DB2, and the first guard band GB1 and the second guard band GB2 described above with reference to FIGS. 5A to 5C are examples. The radar band RB, the first data band DB1 and the second data band DB2, and the first guard band GB1 and the second guard band GB2 according to the disclosure are not limited to those shown in FIGS. 5A to 5C.

Referring to FIG. 5C, the user equipment according to an embodiment may determine an additional data band ADB (from a fourth frequency f4 to a fifth frequency f5) corresponding to a band included in the radar band RB and adjacent to a frequency band (e.g., from the fifth frequency f5 to the sixth frequency f6) used by the radar. FIG. 5C shows that the radar band RB includes two additional data bands ADB. However, the number of additional data bands ADB according to the disclosure is not limited to two.

In the disclosure, the radar signal may include a plurality of sub-signals. For example, referring to FIG. 4A, the radar signal RS may include a plurality of sub-signals (i.e., the plurality of pulse signals PS). In the disclosure, it may be understood that a sub-signal indicates a pulse signal or a narrowband signal included in a radar signal. For example, when a radar signal includes a plurality of pulse signals, the length of a sub-signal may be used to have the same meaning as the length of a pulse signal. In addition, referring to FIG. 5C, the additional data band ADB may be understood as a frequency band between a plurality of sub-signals. For instance, the radar band may comprise a number of sub-signals over which radar signals are detected (e.g. sent or received). The sub-signals may be separated in the frequency domain over the radar band RB. There may therefore be one or more gaps in the frequency domain between sub-signals in which no radar signals are present. These one or more gaps may be one or more additional data bands ADB. The number of additional data bands ADB in a radar band RB may be m-1, wherein m is the number of sub-signals in the radar band RB, and where m is an integer that is greater than or equal to two). The radar band RB may be a frequency range from the start of the first sub-signal in the radar signal to the end of the last sub-signal in the radar signal.

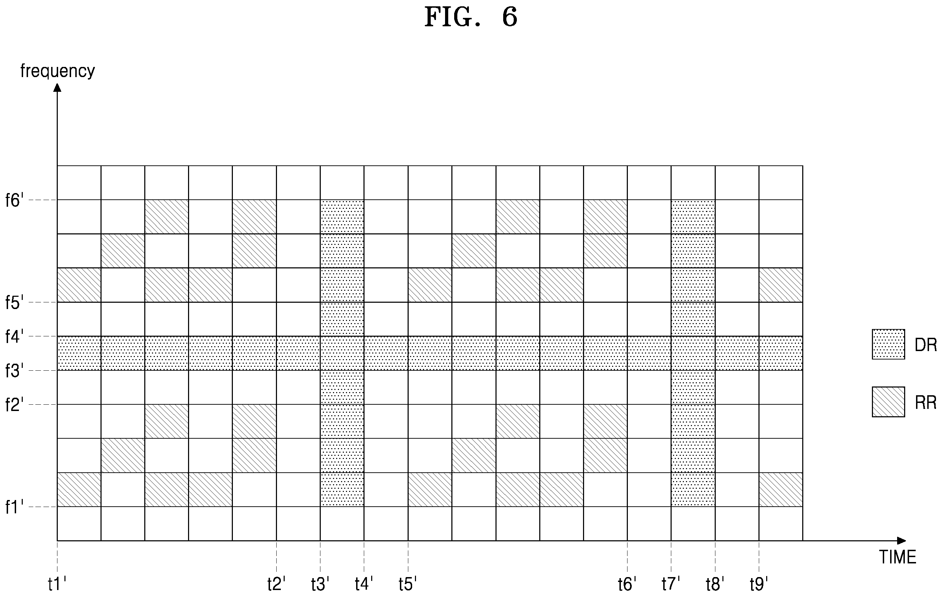

FIG. 6 illustrates a data resource and a radar resource according to an embodiment.

FIG. 6 illustrates a data resource and a radar resource according to a basic structure of a time-frequency domain in a data communication system. Referring to FIG. 6, the horizontal axis indicates a time domain and the vertical axis indicates a frequency domain.

The minimum transfer unit in the time domain is a symbol and the minimum transfer unit in the frequency domain is a subcarrier. A basic unit of a resource in the time-frequency domain is a resource element, which corresponds to one rectangle of FIG. 6.

A user equipment according to the disclosure may generate time measurement information and frequency measurement information by measuring a radar signal shown in FIG. 6. That is, FIG. 6 shows a radar resource RR and a data resource DR identified by the user equipment based on the time measurement information and the frequency measurement information. In addition, as described above, the user equipment and/or a base station may perform data communication by identifying the data resource DR further based on radar information received from a radar.

As described above, the user equipment may determine data periods and radar periods based on the time measurement information. In addition, the user equipment may determine data bands and radar bands based on the frequency measurement information. Each of the data periods and the data bands may include the data resource DR, which the user equipment and the base station use for data communication, and each of the radar periods and the radar bands may include the radar resource RR, which data uses.

The data resource DR and the radar resource RR are shown in FIG. 6. The positions and patterns of the data resource DR and the radar resource RR according to the disclosure are not limited to those shown in FIG. 6.

Referring to FIG. 6 with the description made above, because the radar resource RR, which that radar uses, is included in a period from a first time point t1' to a second time point t2', the user equipment may determine the period from the first time point t1' to the second time point t2' as a radar period. Similarly, because the radar resource RR is included in a period from a fifth time point t5' to a sixth time point t6', the user equipment may determine the period from the fifth time point t5' to the sixth time point t6' as a radar period.

In addition, because the radar resource RR is included in a frequency band from a first frequency f1' to a second frequency f2', the user equipment may determine the frequency band from the first frequency f1' to the second frequency f2' as a radar band. Similarly, because the radar resource RR is included in a frequency band from a fifth frequency f5' to a sixth frequency f6', the user equipment may determine the frequency band from the fifth frequency f5' to the sixth frequency f6' as a radar band.

The user equipment may determine resources included in the data periods and the data bands as the data resource DR. The user equipment and/or the base station according to the disclosure may measure a radar signal to identify, as the data resource DR, a resource included in a time period (e.g., from the second time point t2' to the fifth time point t5'), which a radar does not use, in a frequency band (e.g., from the first frequency f1' to the second frequency f2'), which the radar uses. Therefore, the user equipment and/or the base station may efficiently use a limited resource for data communication.

Referring to FIG. 6, the user equipment may determine a period from the second time point t2' to the fifth time point t5', in which the radar resource RR is not included for a certain time, as a data period and identify a resource included in the data period as the data resource DR. Similarly, the user equipment may determine a period from the sixth time point t6' to a ninth time point t9' as a data period and identify a resource included in the data period as the data resource DR.

As described above with reference to FIG. 4C, a data period may include a guard period. The guard period may not include the data resource DR. Referring to FIG. 6, a guard period included in the data period from the second time point t2' to the fifth time point t5' may include a period from the second time point t2' to a third time point t3' and a period from a fourth time point t4' to the fifth time point t5'. Similarly, a guard period included in the data period from the sixth time point t6' to the ninth time point t9' may include a period from the sixth time point t6' to a seventh time point t7' and a period from an eighth time point t8' to the ninth time point t9'. As described above, a guard period may not include the data resource DR. Therefore, the data resource DR in the time domain may be included in a period from the third time point t3' to the fourth time point t4' and a period from the seventh time point t7' to the eighth time point t8'.

Referring to FIG. 6, the user equipment and/or base station may determine a band from the second frequency f2' to the fifth frequency f5', in which the radar resource RR is not included within a certain frequency band, as a data band and identify a resource included in the data band as the data resource DR. The user equipment and/or the base station according to the disclosure may measure a radar signal to identify, as the data band DB, a resource included in a frequency range (e.g., from the second frequency f2' to the fifth frequency f5'), which a radar does not use, in a time period (e.g., from the first time point t1' to the second time point t2'), which the radar uses. Therefore, the user equipment and/or the base station may efficiently use a limited resource for data communication.

As described above with reference to FIG. 5C, a data band may include a guard band. The guard band may not include the data resource DR. Referring to FIG. 6, a guard band included in the data band from the second frequency f2'to the fifth frequency f5' may include a band from the second frequency f2' to a third frequency f3' and a band from a fourth frequency f4' to the fifth frequency f5'. As described above, a guard band may not include the data resource DR. Therefore, the data resource DR in the frequency domain may be included in a band from the third frequency f3' to the fourth frequency f4'.

One or both of the data band and the data period may be used. Where the data band is being used, any resource in the data band (other than resources falling within any guard bands that may be being used) may be allocated for data transmission. Similarly, where the data period is being used, any resource in the data period (other than resources falling within any guard bands that may be being used) may be allocated for data transmission. Where both the data band and the data period are being used, any resource in the data band and the data period (other than resources falling within any guard bands that may be being used) may be allocated for data transmission.

Note that where both the data band and the data periods are being used, and guard bands are being used, any guard bands in the frequency domain may not extend into the data period, and any guard bands in the time domain may not extend into the frequency band. That is, any guard bands in the frequency domain may apply only during the radar period, and any guard bands in the time domain may apply only for resources in the radar band.

As described above with reference to FIG. 6, the user equipment and/or the base station may measure a radar signal to identify the data resource DR so as not to overlap with the radar resource RR to which the radar signal is allocated. The user equipment and/or the base station may coexist with a radar system by performing data communication based on the identified data resource DR.

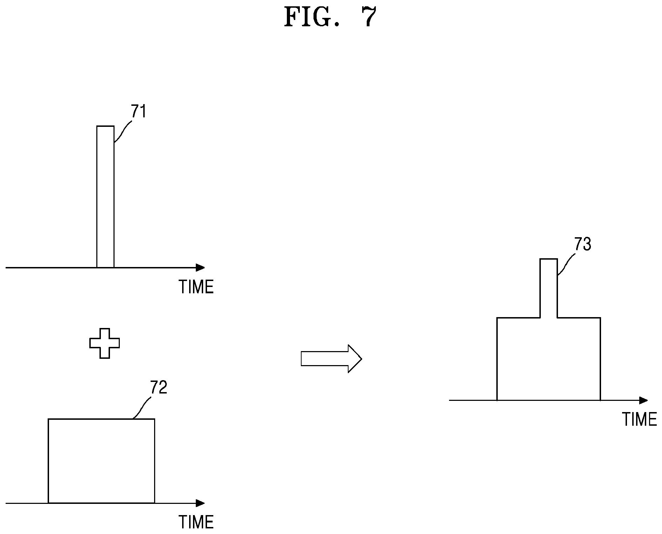

FIG. 7 illustrates interference by a radar signal to a data signal according to an embodiment.

Even in a time period used by a radar, i.e., a radar period, a user equipment and/or a base station may perform data communication.

Referring to FIG. 7, when the user equipment performs data communication in the radar period, the user equipment may receive a distorted signal 73. That is, the user equipment may receive the distorted signal 73 distorted from a data signal 72 transmitted by the base station, due to a radar signal 71 transmitted by a radar. The distorted signal 73 may be a combination of the radar signal 71 and the data signal 72.

When the user equipment and the base station perform data communication in the radar period, the data signal 72 may be distorted due to interference by the radar signal 71, thereby decreasing data communication quality.

The user equipment according to the present disclosure can identify data resources included in the unused data intervals of the radar and perform data communication with the base station using these data resources. Additionally, the user equipment according to the present disclosure may also perform data communication with the base station using resources that are utilized by the data. Therefore, as described above, the user equipment according to the present disclosure is capable of performing data communication with the base station not only in resources that are unused by the radar, but also in resources that are used by the radar through pre-compensation or post-compensation as further described below.

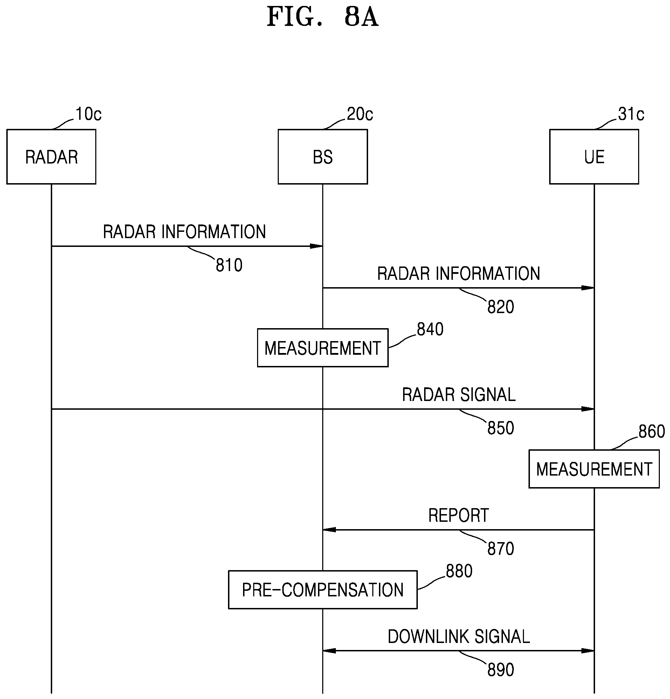

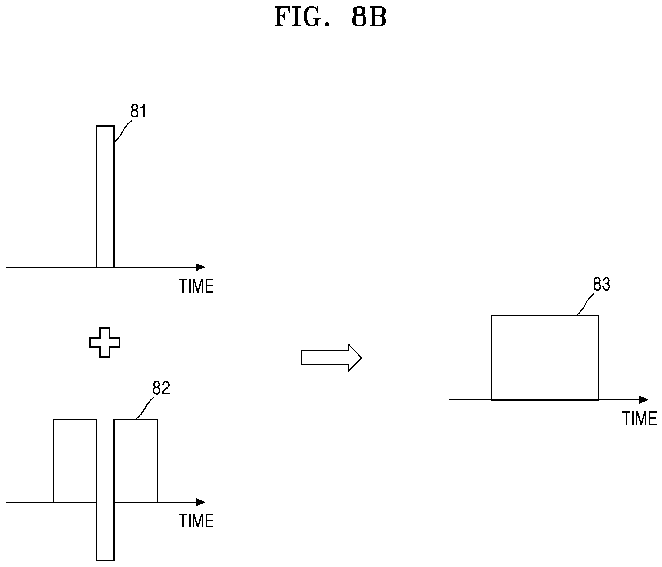

FIG. 8A is a signal exchange diagram illustrating a pre-compensation operation of a data communication system according to an embodiment. FIG. 8B illustrates a reception signal according to the pre-compensation operation described with reference to FIG. 8A.

A radar 10c, a base station 20c, and a user equipment 31c shown in FIG. 8A correspond to the radar, the base station, and the user equipment described above, respectively. Operations 810, 820, 850, and 860 may be understood from the description made above. Therefore, descriptions of operations 810, 820, 850, and 860 are omitted herein.

Referring to FIG. 8A, in operation 840, the base station 20c may measure a radar signal. The base station 20c may measure the data signal similarly to a method, performed by the user equipment 31c, of measuring a radar signal. The radar signal measured by the base station 20c may differ from the radar signal measured by the user equipment 31c according to the relative positions of the base station 20c and the user equipment 31c with respect to the radar 10c. Each of the base station 20c and the user equipment 31c may measure a radar signal to perform data communication by minimizing interference by the radar 10c.

In operation 870, the base station 20c may receive time measurement information generated by the user equipment 31c having measured the radar signal. The user equipment 31c may measure the radar signal received through a frequency band from the radar 10c to generate time measurement information about a plurality of radar periods in which the radar signal is received in the frequency band.

In operation 880, the base station 20c may perform pre-compensation on a data signal based on the time measurement information and/or radar information. To prevent the user equipment 31c from receiving a signal distorted due to interference by the radar signal, the base station 20c may generate a pre-compensation signal 82 (see FIG. 8B) by previously offsetting the radar signal 71 (see FIG. 7) in the data signal 72 (see FIG. 7) and transmit the pre-compensation signal 82 to the user equipment 31c.

The base station 20c according to the disclosure may generate the pre-compensation signal 82 to perform data communication with the user equipment 31c through a radar resource included in a radar period and/or a radar band.

FIG. 8B may be understood with reference to FIG. 7. As described above with reference to FIG. 7, when the base station 20c performs data communication with the user equipment 31c in a radar period, a data signal may be distorted. Therefore, the base station 20c according to the disclosure may generate the pre-compensation signal 82 by previously compensating for the data signal 72 (see FIG. 7) based on a radar signal 81. The base station 20c according to the disclosure may obtain information about the radar signal 81 based on the radar information received from the radar 10c and perform pre-compensation based on the obtained information. Herein, the radar information may include at least one of the shape of a sub-signal included in a radar signal (e.g. a radar signal received by the user equipment 31c), the power of the sub-signal, the length of the sub-signal, a radar period, a data period, and a time offset. Pre-compensation may comprise removing (e.g. subtracting) the radar signal 81 (e.g. as previously measured by the user equipment 31c) from the data signal 72. The pre-compensation may remove from the data signal 72 an expected distortion caused by the radar signal 81.

The base station 20c may transmit the pre-compensation signal 82 to the user equipment 31c through a time resource used by the radar 10c. Because the pre-compensation signal 82 is a signal obtained by pre-compensating for distortion of the data signal 72 (see FIG. 7) due to the radar signal 81, the user equipment 31c may receive a reception signal 83 similar to or the same as the data signal 72 (see FIG. 7) because the pre-compensation signal 82 is distorted by the radar signal 81. Therefore, the base station 20c according to the disclosure may generate the pre-compensation signal 82 based on the radar information to perform data communication with the user equipment 31c through a time resource used by the radar 10c.

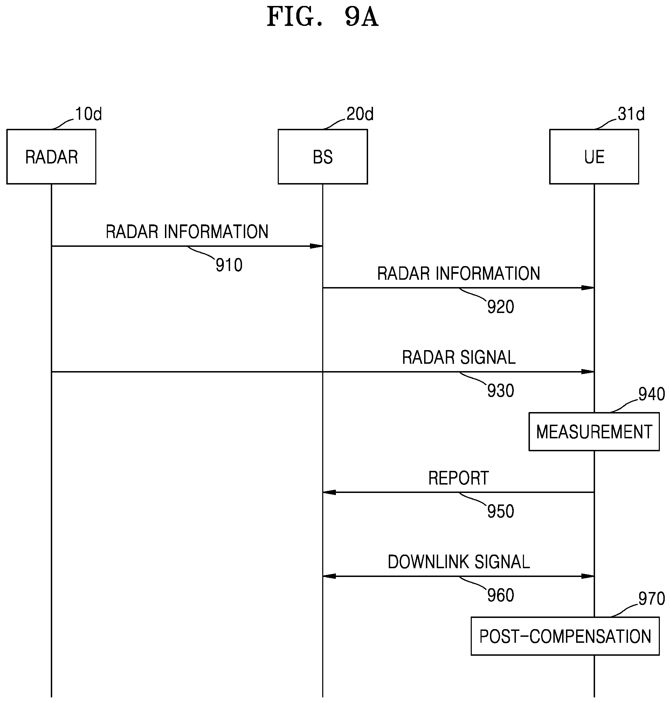

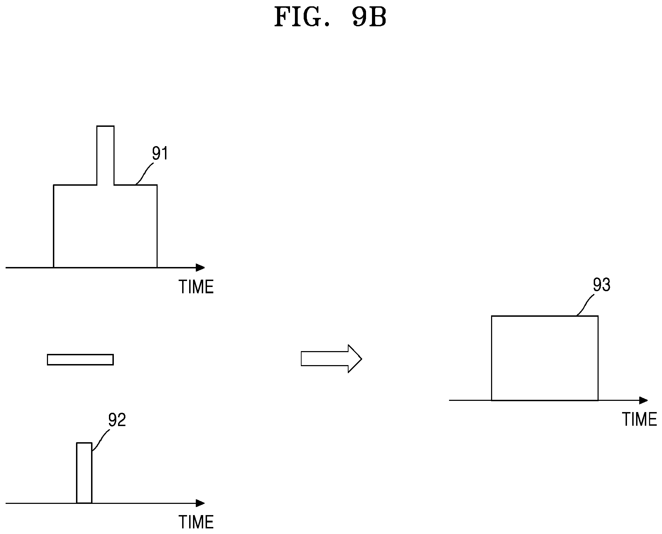

FIG. 9A is a signal exchange diagram illustrating a post-compensation operation of a data communication system according to an embodiment. FIG. 9B illustrates a reception signal according to the post-compensation operation described with reference to FIG. 9A.

A radar 10d, a base station 20d, and a user equipment 31d shown in FIG. 9A correspond to the radar, the base station, and the user equipment described above, respectively. Operations 910, 920, 930, 940, 950, and 960 may be understood from the description made above. Therefore, descriptions of operations 910, 920, 930, 940, 950, and 960 are omitted herein.

Referring to FIGS. 9A and 9B, in operation 970, the user equipment 31d may perform post-compensation on a reception signal 91 (e.g. a received signal) based on time measurement information and/or radar information. In more detail, the user equipment 31d may generate an offset 92 based on the time measurement information and/or the radar information described above with reference to FIGS. 8A and 8B and generate a post-compensation signal 93 by offsetting the offset 92 in the reception signal 91. The offset 92 is a value corresponding to the radar signal 71 (see FIG. 7). The offset may be removed (e.g. subtracted) from the reception signal to obtain the post-compensation signal 93. Accordingly, post-compensation may comprise removing (e.g. subtracting) a radar signal 72 (e.g. as previously measured by the user equipment 31d) from the reception signal 91.

The user equipment 31d according to the disclosure may generate the post-compensation signal 93 to perform data communication with the base station 20d through a radar resource included in a radar period and/or a radar band.

As described above with reference to FIG. 7, when the base station 20d performs data communication with the user equipment 31d in a radar period, a data signal may be distorted. Therefore, the user equipment 31d according to the disclosure may receive the reception signal 93 corresponding to the distorted signal 73 distorted from the data signal 72 of FIG. 7 due to the radar signal 71. The user equipment 31d may generate the post-compensation signal 93 corresponding to the data signal 72 of FIG. 7 by post-compensating for (or offsetting) the reception signal 91 based on the offset 92 to perform data communication with the base station 20d in a radar period and/or a radar band. The user equipment 31d and the base station 20d according to the disclosure may perform data communication through a time resource, which the radar 10d uses, based on the post-compensation signal 93.

The user equipment 31d according to the disclosure may transmit user equipment information to the base station 20d for post-compensation. The user equipment information may be information related to whether to enable post-compensation.

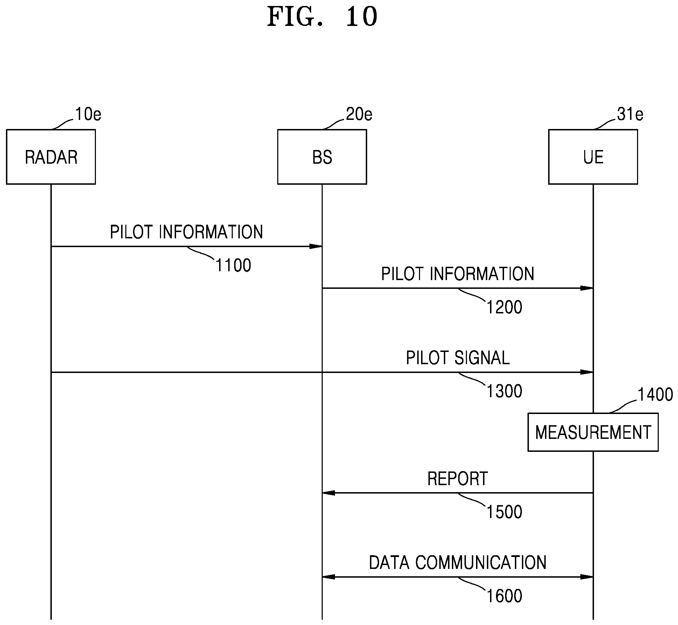

FIG. 10 is a signal exchange diagram between a radar and a data communication system according to an embodiment.

A radar 10e, a base station 20e, and a user equipment 31e shown in FIG. 10 correspond to the radar, the base station, and the user equipment described above, respectively.

Operations 1100, 1200, 1300, 1400, 1500, and 1600 of FIG. 10 correspond to operations 310, 320, 330, 340, 350, and 360 of FIG. 3, respectively. However, FIG. 10 differs from FIG. 3 only in that the user equipment 31e receives a pilot signal instead of a radar signal and each of the base station 20e and the user equipment 31e receives pilot information instead of radar information. A pilot signal may be a reference signal transmitted by the radar 10e for use in signal processing tasks (e.g. one or more of synchronization, channel estimation, phase correction and interference mitigation). For instance, a pilot signal may be used for one or more of supervisory, control, equalization, continuity, synchronization, and reference purposes. This may be in contrast to a radar signal that may be transmitted by the radar 10e for use in sensing an object (e.g. detecting, locating, tracking or imaging a target).

The user equipment 31e according to the disclosure may perform data communication with the base station 20e through a resource, which the radar 10e does not use, by receiving a pilot signal generated based on a radar signal. The radar 10e may generate a pilot signal based on a radar signal. The radar 10e may transmit the pilot signal separately from the radar signal. The pilot signal may include the radar signal and thus have a shape similar to the shape of the radar signal. Therefore, because the pilot signal is similar to the radar signal, a measurement result of the pilot signal may be similar to a measurement result of the radar signal.

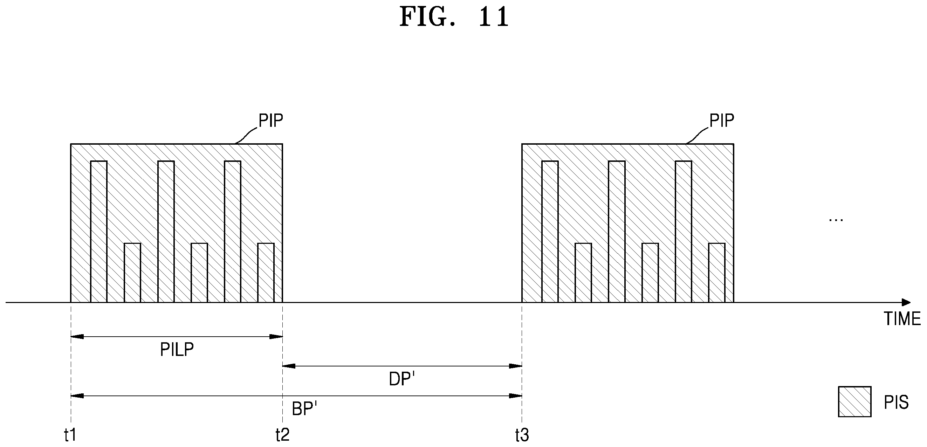

As described below with reference to FIG. 11, the user equipment 31e may more easily measure the pilot signal than the radar signal. For example, because the pilot signal may have a strength greater than that of the radar signal, the user equipment 31e may more easily measure the pilot signal than the radar signal.

Pilot information according to the disclosure may include at least one of the shape of a sub-signal included in the pilot signal, the power of the sub-signal, the length of the sub-signal, a pilot period, a data period, and a time offset.

The pilot signal is described below in more detail with reference to FIG. 11.

FIG. 11 illustrates a pilot signal according to an embodiment.

FIG. 11 may be understood with reference to the description made above and may repeat the description made above with reference to FIG. 4A. The description made with reference to FIG. 4A is omitted herein.

Referring to FIG. 11, a pilot signal PIS measured by a user equipment may include pilot pulses PIP spaced apart from each other at a certain interval in terms of time domain. That is, the user equipment may periodically receive and measure the pilot signal PIS, i.e., the pilot pulses PIP. Similar to a sub-signal included in the radar signal described above, the pilot pulses PIP may be referred to as sub-signals included in the pilot signal PIS.

Referring to FIGS. 11 and 4A, the pilot signal PIS may include the plurality of pulse signals PS (see FIG. 4A) included in the radar signal RS (see FIG. 4A). The pilot signal PIS may include a time resource and a frequency resource to which the radar signal RS (see FIG. 4A) is allocated. In addition, the pilot signal PIS may further include a time resource and a frequency resource between sub-signals included in the radar signal RS (see FIG. 4A). That is, the pilot signal PIS may include a radar resource and further include some of a plurality of data resources identified by measuring a radar signal. For instance, the pilot signal PIS may include one or more resources not used by the radar (e.g. all time resources in the radar period and/or all frequency resources in the radar band). The user equipment and/or a base station according to the disclosure may perform data communication by measuring the pilot signal PIS, thereby reducing the number of usable data resources. However, the user equipment and/or the base station may generate time measurement information more easily and accurately than when a radar signal is measured, and perform data communication based on the time measurement information.

Similar to generating time measurement information by measuring a radar signal, the user equipment may generate time measurement information by measuring the pilot signal PIS. The user equipment may report the time measurement information to the base station. The base station may generate control information based on the time measurement information. The base station and/or the user equipment may identify a pilot period PILP and a data period DP' based on the control information. The pilot period PILP may correspond to the radar period RP of FIG. 4A. Therefore, the data period DP' may be a period in which the pilot signal PIS is not received by the user equipment (or does not exist) for a certain time, and may correspond to the data period DP of FIG. 4A. That is, the user equipment may determine a plurality of pilot periods PILP and determine at least one data period DP' between the plurality of pilot periods PILP. The user equipment may identify a data resource included in the data period DP' and perform data communication with the base station based on the data resource.

Similar to the description made above, the user equipment and/or the base station according to the disclosure may determine a guard period included in the data period DP'. In addition, the user equipment and/or the base station may determine a frequency band, i.e., a data band, which the pilot signal PIS does not use, and determine a guard band included in the data band.

FIG. 11 shows that the shape of the pilot signal PIS is a pulse shape, the pilot signal PIS according to the disclosure is not limited to the pilot signal having the pulse shape. For example, when a radar signal is a narrowband signal, because the pilot signal PIS is similar to the radar signal, the shape of the pilot signal PIS may be the shape of the narrowband signal.

While example embodiments of the disclosure have been particularly shown and described, it will be understood that various changes in form and details may be made therein without departing from the scope of the following claims.

## Claims

1. A method of operating a user equipment, the method comprising:
generating time measurement information about a plurality of radar periods in which a radar signal is received on a first frequency band, by measuring the radar signal transmitted from a radar;
reporting the time measurement information to a base station;
receiving, from the base station, control information based on the time measurement information;
identifying, based on the control information, a first data resource included in a data period, which is unused by the radar, between the plurality of radar periods; and
performing data communication with the base station based on the first data resource.

2. The method of claim 1, wherein the time measurement information comprises at least one of:
a time period in which the radar signal is measured by the user equipment, and
a time offset.

3. The method of claim 1 or claim 2, further comprising receiving, from the base station, radar information of the radar signal which the base station has received from the radar,
wherein the generating the time measurement information comprises generating the time measurement information further based on the radar information, and
wherein the radar information comprises at least one of a rotation period of the radar, an angle of the radar signal, a strength of the radar signal, a radar active time, and a pulse length.

4. The method of any preceding claim, wherein the data period comprises a guard period adjacent to a radar period based on a time axis, and
wherein the identifying the first data resource comprises identifying, as the first data resource, a resource except for a resource included in the guard period.

5. The method of claim 4, wherein a length of the guard period is determined based on at least one of a length of the radar period, a rotating speed of the radar, and a length of the data period with respect to the length of the radar period.

6. The method of any preceding claim, wherein the radar signal comprises a plurality of sub-signals,
wherein any one of the plurality of radar periods comprises a plurality of sub-radar periods in which the plurality of sub-signals are received,
wherein the time measurement information further comprises information about an additional data period unused by the radar between the plurality of sub-radar periods, and
wherein the method further comprises:
identifying a second data resource included in the additional data period based on the control information; and
performing data communication with the base station based on the second data resource.

7. The method of claim 6, further comprising receiving, from the base station, radar information of the plurality of sub-signals which the base station has received from the radar,
wherein the generating the time measurement information comprises generating the time measurement information further based on the radar information, and
wherein the radar information comprises at least one of a shape of a sub-signal included in the radar signal, power of the sub-signal, a length of the sub-signal, a radar period, the data period, and a time offset.

8. The method of any preceding claim, wherein the time measurement information further comprises frequency measurement information indicating the first frequency band on which the radar signal is received,
wherein the control information is further based on the frequency measurement information, and
wherein the method further comprises:
identifying a third data resource corresponding to a data band, which does not overlap with the first frequency band, based on the control information; and
performing data communication with the base station based on the third data resource.

9. The method of claim 8, wherein the data band comprises a guard band adjacent to a radar band, which the radar uses, based on a frequency axis, and
wherein the identifying the third data resource comprises identifying, as the third data resource, a resource except for a resource included in the guard band.

10. The method of claim 9, wherein a length of the guard band is determined based on at least one of power and frequency swing of the radar signal.

11. The method of any preceding claim, further comprising:
receiving, from the base station, radar information of the radar signal which the base station has received from the radar;
receiving, through a radar resource included in a radar period, a reception signal distorted from a data signal, which is transmitted from the base station, due to the radar signal;
generating an offset corresponding to the radar signal based on the radar information; and
generating a post-compensation signal by post-compensating for the reception signal based on the offset,
wherein the radar information comprises at least one of a shape of a sub-signal included in the radar signal, power of the sub-signal, a length of the sub-signal, the radar period, a data period, and a time offset.

12. A method of operating a user equipment, the method comprising:
generating time measurement information about a plurality of pilot periods in which a pilot signal is received on a first frequency band, by measuring the pilot signal transmitted from a radar;
reporting the time measurement information to a base station;
receiving, from the base station, control information based on the time measurement information;
identifying, based on the control information, a first data resource included in a data period, which is unused by the radar, between the plurality of pilot periods; and
performing data communication with the base station based on the first data resource,
wherein the pilot signal is generated based on a radar signal transmitted from the radar and
wherein the pilot signal comprises at least a time resource and a frequency resource to which the radar signal is allocated.

13. The method of claim 12, further comprising receiving, from the base station, pilot information of the pilot signal which the base station has received from the radar,
wherein the generating the time measurement information comprises generating the time measurement information further based on the pilot information, and
wherein the pilot information comprises at least one of a shape of a sub-signal included in the pilot signal, power of the sub-signal, a length of the sub-signal, a pilot period, a data period, and a time offset.

14. The method of claim 12 or claim 13, wherein the data period comprises a guard period adjacent to a pilot period based on a time axis, and
wherein the identifying the first data resource comprises identifying, as the first data resource, a resource except for a resource included in the guard period.

15. The method of claim 14, wherein a length of the guard period is determined based on at least one of a length of the pilot period, a rotating speed of the radar, and a length of the data period with respect to the length of the pilot period.
